# EUROPÄISCHE PATENTSCHRIFT

(11) **EP 4 640 461 B1**
(45) Veröffentlichungstag und Bekanntmachung des Hinweises auf die Patenterteilung: **10.06.2026**
(21) Anmeldenummer: 24172800.5
(22) Anmeldetag: 26.04.2024
(51) Int. Cl.: B60K 1/04

(54) **BATTERIETRÄGERANORDNUNG FÜR EIN ELEKTROFAHRZEUG**
BATTERY SUPPORT ASSEMBLY FOR AN ELECTRIC VEHICLE
ENSEMBLE SUPPORT DE BATTERIE POUR VÉHICULE ÉLECTRIQUE

(43) Veröffentlichungstag der Anmeldung: 29.10.2025
(73) Patentinhaber: Benteler Automobiltechnik GmbH, 33102 Paderborn (DE)
(72) Erfinder: BUSE, Christian, 33165 Lichtenau (DE); FRISCHKORN, Conrad, 33102 Paderborn (DE)
(74) Vertreter: Osterhoff, Utz

(56) Entgegenhaltungen:
- DE-A1- 102019 123 842
- US-A1- 2022 016 966
- US-A1- 2022 161 647

## Beschreibung

Die vorliegende Erfindung betrifft eine Batterieträgeranordnung für ein Elektrofahrzeug gemäß den Merkmalen des Anspruchs 1. j

Aus dem Stand der Technik ist es bekannt für Kraftfahrzeuge, insbesondere in der Elektromobilität, sogenannte Battery Trays einzusetzen. Solche Battery Trays sind Batterieträger bzw. Batteriewannen. Diese weisen eine Batteriewanne zur Aufnahme von Antriebsbatterien bzw. Traktionsbatterien auf. Die Batteriewanne wird mit einem Deckel verschlossen.

Eine solche Batteriewanne ist zumeist im Unterflurbereich eines Kraftfahrzeuges angeordnet. Die Batteriewanne erstreckt sich zumeist über einen großen Teil des Unterflurbereiches, insbesondere der Fahrgastzelle. Seitlich im Bereich der Schweller sind Längsseiten der Batteriewanne ausgebildet. Oftmals ist über diese Längsseiten die Batteriewanne von unten an eine Kraftfahrzeugkarosserie insbesondere im Bereich der Schweller gekoppelt. Kopf- und Heckseitig sind ebenfalls Querseiten ausgebildet, die sich im Wesentlichen über die Fahrzeugbreite eines solchen Kraftfahrzeuges erstrecken.

Aus der DE 10 2023 124 896 A1 ist ein Unterbodenblech bekannt, welches als Unterfahrschutzblech dient und unterhalb einer solchen Batteriewanne angeordnet ist.

Aus der US 2022/016966 A1 und US 2022/161647 A1 sind ferner Batterieanordnungen im Unterflurbereich eines Kraftfahrzeuges bekannt.

Aufgabe der vorliegenden Erfindung ist es, eine Batterieträgeranordnung bereitzustellen, die gegenüber aus dem Stand der Technik bekannten Batterieträgeranordnungen konstruktiv vereinfacht ist, jedoch gleichzeitig zumindest gleichbleibende bzw. gesteigerte Crashsicherheit aufweist und günstiger herstellbar ist.

Die zuvor genannte Aufgabe wird erfindungsgemäß bei einer Batterieträgeranordnung mit den Merkmalen im Anspruch 1 gelöst.

Vorteilhafte Ausgestaltungsvarianten sind in den abhängigen Ansprüchen beschrieben.

Die Batterieträgeranordnung ist für ein Elektrofahrzeug gedacht. Sie weist einen Batteriekasten auf. Der Batteriekasten selbst ist ausgebildet aus einer Haube und einen Boden. Die Haube weist eine wannenförmige Konfiguration auf. Die Haube weist jedoch im Einbauzustand mit ihrer Öffnung auf die Kraftfahrzeugvertikalrichtung nach unten. Die Haube wird somit von einem Boden verschlossen. Der Boden selbst weist ebenfalls eine wannenförmige Konfiguration auf. Der Boden ist jedoch an seinen Stirnseiten, also auf die Kraftfahrzeuglängsrichtung bezogen, vorne und hinten offen und hat hier keine Seitenwände an der Wanne.

Der Boden und die Seitenwände bilden somit die Batteriewanne aus. Der Boden selbst ist hergestellt als warmgeformtes und pressgehärtetes Bauteil aus einer Stahlblechplatine. Insbesondere kommt hier eine härtbare Stahllegierung zum Einsatz. Dies kann beispielsweise eine Bor-Mangan-Stahllegierung sein, beispielsweise 22MnB5.

Der Batteriekasten ist somit ausgebildet aus der Haube, die auch als Deckel bezeichnet werden kann. Die Haube weist einen Haubenboden bzw. Haubendeckel auf, welcher in Kraftfahrzeugvertikalrichtung im Einbauzustand nach oben zeigend angeordnet ist. Die Haube weist weiterhin Seitenwände auf. Die Seitenwände sind umlaufend ausgebildet. Hierzu wird insbesondere die Haube als Tiefziehbauteil oder als Umform- bzw. Faltbauteil aus einer Blechplatine, insbesondere Stahlblechplatine hergestellt. Die Haube kann jedoch auch aus einer Leichtmetallplatine hergestellt sein. Die Haube weist an ihrem Ende der Seitenwände einen nach außen abstehenden umlaufenden Flansch auf. Der Flansch ist dann mit dem Boden gekoppelt. Insbesondere erfolgt diese Kopplung durch ein Verschrauben. Bevorzugt ist weiterhin zwischen Flansch und Boden ein Dichtmittel eingegliedert. Im Einbauzustand ist somit der Boden auf die Kraftfahrzeugvertikalrichtung bezogen unten angeordnet und die Haube darüber.

Erfindungsgemäß zeichnet sich Batterieträgeranordnung nunmehr dadurch aus, dass der Boden einstückig und werkstoffeinheitlich seitlich über die Seitenwände des Batteriekastens überstehende Rahmenseitenwände aufweist. Die Rahmenseitenwände stehen somit in Kraftfahrzeugquerrichtung seitlich über die Seitenwände über. Die Rahmenseitenwände können somit als Verlängerung des Bodens ausbildet sein. Die Rahmenseitenwände sind einstückig und werkstoffeinheitlich mit dem Boden hergestellt aus einer Stahlblechplatine. Die Rahmenseitenwände stehen weiterhin in Kraftfahrzeugvertikalrichtung, zumindest abschnittsweise schräg nach oben verlaufend.

Erfindungsgemäß ist somit der Boden bzw. das Bodenblech zumindest abschnittsweise wannenförmig ausgebildet. Das abschnittsweise bezieht sich insbesondere auf die Seitenwände bzw. Rahmenseitenwände. Auf dem Boden, also innerhalb des Bodenbleches, sind dann die Seitenwände der Haube angeordnet und bilden damit den Batteriekasten aus. Insbesondere sind dies Stirnseitenwände, die also in Kraftfahrzeuglängsrichtung vorne und hinten, angeordnet sind. Ebenfalls sind dies seitliche Seitenwände, die in Kraftfahrzeugquerrichtung jeweils an einer Seite angeordnet sind. Somit ist eine umlaufende Seitenwand gegeben, die auf dem Boden aufgesetzt ist und mit dem Boden gekoppelt ist. Hierdurch ist zusammen mit dem Boden eine Batteriewanne ausgebildet. Die Batteriewanne ist dann an ihrer, im Einbauzustand, Oberseite durch den Haubenboden verschlossen. Der Haubenboden und die Seitenwände sind bevorzugt einstückig und werkstoffeinheitlich, wie zuvor beschrieben, als Umformbauteil ausgebildet.

Es stehen dann jedoch erfindungsgemäß auf die Kraftfahrzeugquerrichtung bezogen seitlich die Rahmenseitenwände über und verlaufen abschnittsweise schräg nach oben auf die Kraftfahrzeugvertikalrichtung bezogen. Insbesondere weist der Boden selbst jedoch keine auf die Kraftfahrzeuglängsrichtung bezogene Stirn- und Heckwand auf.

Erfindungsgemäß kann somit die Formgebungsfreiheit des Bodens bzw. des Bodenbleches deutlich erleichtert werden, was die Produktionskosten sowie den Materialeinsatz senkt. Das Bodenblech kann aufgrund seiner hohen Zugfestigkeit von bevorzugt mehr als 1200 MPa, insbesondere mehr als 1350 MPa, gleichzeitig als Unterfahrschutz dienen. Ein zusätzliches Bodenblech in der Batteriewanne kann somit entfallen. Hierdurch sinken der Materialeinsatz, das Bauteilgewicht sowie der Fertigungsaufwand, insbesondere gegenüber dem genannten Stand der Technik.

Die Seitenwände können mit einem Flansch auf den Boden aufgesetzt werden und dann insbesondere unter Eingliederung eines Dichtmittels verschraubt werden. Es ist somit insbesondere möglich spätere Wartungsarbeiten durchzuführen, beispielsweise die innerhalb des Batteriekasten angeordneten Batterien auszutauschen, zu reparieren oder sonstige Wartungsarbeiten auszuführen. Hierzu kann die Verschraubung zwischen Haube und Bodenblech gelöst werden, um an das Innere des Batteriekastens zu gelangen.

Damit die Unterfahrschutzfunktion verbessert ist, sind insbesondere Sicken in den Boden eingeformt. Die Sicken können in Kraftfahrzeuglängsrichtung verlaufen. Bevorzugt sind die Sicken auf die Kraftfahrzeugvertikalrichtung nach unten über den Boden überstehend ausgeformt. Die Sicken selbst sind in ihrem Querschnitt, wobei der Querschnitt in Kraftfahrzeugquerrichtung liegt, U-förmig ausgebildet. Der Boden selbst ist eben, wobei die Sicken dann über den ebenen Boden überstehen, hier insbesondere bezogen auf die Kraftfahrzeugvertikalrichtung nach unten überstehen.

Die Sicken können jedoch auch in Kraftfahrzeugquerrichtung verlaufen. Auch ist eine Kombination von in Kraftfahrzeuglängsrichtung sowie Kraftfahrzeugquerrichtung verlaufenden Sicken vorstellbar. In einer weiteren alternativen oder ergänzenden Ausgestaltungsvariante können auch Sicken derart ausgebildet sein, dass sie in Einbausituationen auf die Kraftfahrzeugvertikalrichtung nach oben gerichtet sind, mithin in den Innenraum des Batteriekastens ragend angeordnet sind. Auf den nach innen geformten Sicken können dann innerhalb des Batteriekastens Gegenstände, beispielsweise Batteriemodule, stehend angeordnet sein und auf den nach innen gerichteten Sicken bzw. deren Aufstandsflächen aufstehen. Ebenso können im Batteriekasten befindliche Querstreben auf den Sicken aufliegen.

Weiterhin besonders bevorzugt sind die Rahmenseitenwände als Versteifungsrahmen ausgebildet. Ein zusätzlicher Versteigungsrahmen als externes Bauteil kann somit entfallen. Hierzu können insbesondere folgende alternative oder sich ergänzende Maßnahmen eingesetzt werden, wonach zum einen der seitliche Überstand des Bodens in die schräg nach oben verlaufende Fläche der Rahmenseitenwand Quersicken bzw. Versteifungssicken eingeformt sind. Ergänzend oder alternativ können zwischen Rahmenseitenwand und Seitenwand Versteifungselemente eingesetzt werden, insbesondere diese Versteifungselemente als Rippen oder Finnen eingesetzt. Insbesondere sind dies Abstandsbleche. Es können auch Deformationselemente eingesetzt sein, wobei die Deformationselemente selbst beispielsweise als Hutprofile ausgebildet sind.

Als weitere versteifende Maßnahme ist bevorzugt auf der Rahmenseitenwand ein oberes Rahmenblech aufgesetzt. Besonders bevorzugt ist dann im Querschnitt zwischen oberem Rahmenblech, Rahmenseitenwand und der Seitenwand der demgegenüber innenliegenden Batteriewanne im Querschnitt ein geschlossenes Hohlprofil ausgebildet. Somit ist ein seitlicher Rahmen ausgebildet. Dieser seitliche Rahmen erstreckt sich insbesondere in Kraftfahrzeuglängsrichtung über die gesamte Länge der Batteriewanne bzw. des Batterieträgers. Der Rahmen fungiert dabei zum einen als eine Art Schweller bzw. Versteifungsrahmen. Der Rahmen kann jedoch auch bei zum Beispiel einem Seitencrash nach dem Wirkprinzip einer Crashbox ausgebildet sein und sich initialverformen und Crashenergie abzubauen, gleichzeitig dadurch jedoch die weiter innenliegende Batteriewanne zunächst vor Deformationen zu schützen.

Weiterhin besonders bevorzugt ist an einer Rahmenseitenwand ein nach außen abstehender Flansch ausgebildet. Der nach außen abstehende Flansch kann nochmals auf die Kraftfahrzeugvertikalrichtung nach oben abgewinkelt sein. Bevorzugt ist dann der nach außen abstehende Flansch der Rahmenseitenwand genutzt, um den Batterieträger von unten an ein Kraftfahrzeug zu koppeln, insbesondere zu verschrauben. Bevorzugt kann weiterhin vorgesehen sein, dass zwischen Flansch und oberem Rahmenblech ein Abstand ausgebildet ist. Bevorzugt sind Abstandhalter, beispielsweise Hülsen eingesetzt. Koppelmittel, beispielsweise in Form von Schraubbolzen, durchgreifen dann den Flansch, den Abstandhalter sowie das obere Rahmenblech und sind dann von unten an ein Kraftfahrzeug gekoppelt. Durch den Abstand ist wiederum ein Querschnitthohlprofil ausgebildet, was ein zusätzliches Widerstandsbauteil entgegen Biegung in Form von Versteifung bildet.

Weiterhin besonders bevorzugt kann der Boden aus einer Tailored Platine hergestellt sein. Beispielsweise kann es sich bei den Tailored Platinen um Tailored Welded Blanks oder Tailored Rolled Blanks handeln. Alternativ und ergänzend kann der Boden Tailored Properties aufweisen. Beispielsweise kann lokal ein Verstärkungspatch aufgebracht sein bzw. können lokal höhere Festigkeitseigenschaften eingestellt werden, beispielsweise durch einen Tailored Tempering Verfahren.

Es ist vorstellbar im Rahmen der Erfindung den Boden bzw. das Bodenblech nur partiell, d. h. lokal presszuhärten. In den pressgehärteten Bereichen weist dies somit die zuvor genannten Festigkeitswerte auf, welche insbesondere über 1000 MPa liegen. Dies kann beispielsweise insbesondere im Bereich der Sicken bzw. im Bereich des zentralen Bodens der Fall sein. Im Bereich der Rahmenseitenwände kann eine geringere Festigkeit, beispielsweise eine Zugfestigkeit Rm zwischen 500 MPa und 850 MPa ausgebildet sein, sodass es im Falle eines Seitencrashes hier zu einem gezielten Deformationsverhalten nach dem Funktionsprinzip einer Crashbox kommt. Mithin kann gezielt Crashenergie in Umformarbeit abgebaut werden.

Weitere Vorteile, Merkmale und Eigenschaften der vorliegenden Erfindung sind in den nachfolgenden Figuren beschrieben. Diese dienen dem einfachen Verständnis der Erfindung.
- Figur 1: eine erfindungsgemäße Batterieträgeranordnung, aufweisend einen Batterieträger,
- Figur 2: eine perspektivische Ansicht von unten auf den erfindungsgemäßen Batterieträger,
- Figur 3: eine Stirnansicht auf die erfindungsgemäße Batterieträgeranordnung.
- Figur 4: perspektivische Ansicht von oben auf ein Bodenblech,
- Figur 5: perspektivische Ansicht von unten auf ein Bodenblech,
- Figur 6: Stirnansicht auf ein Bodenblech,
- Figur 7: Ansicht auf ein Bodenblech von oben.

In den Figuren werden für gleiche oder ähnliche Bauteile dieselben Bezugszeichen verwendet, auch wenn eine wiederholte Beschreibung oder Darstellung aus Vereinfachungsgründen entfällt.

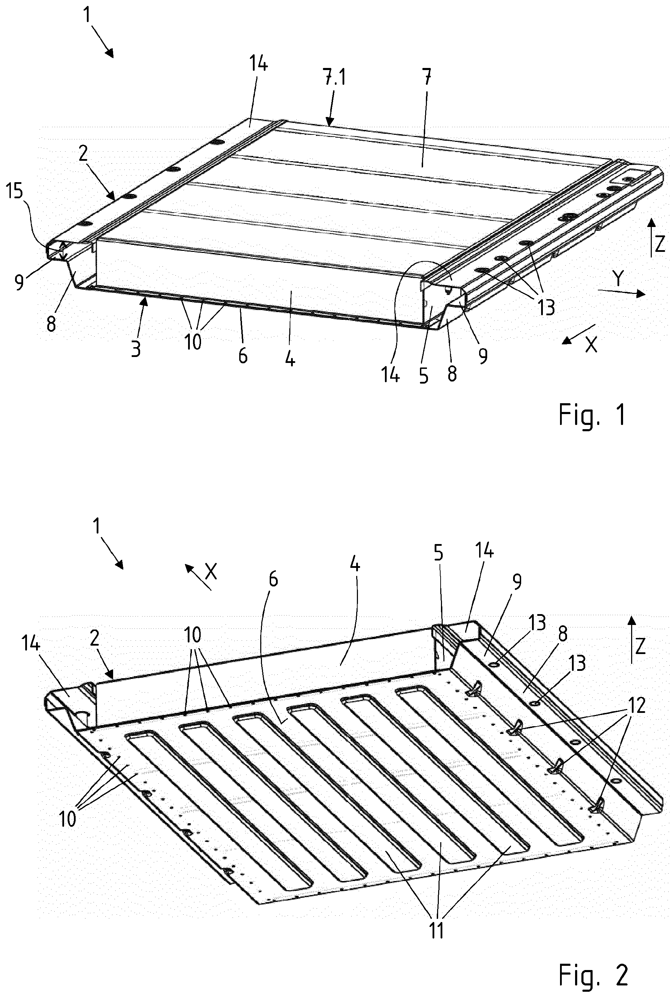

Figur 1 zeigt eine erfindungsgemäß Batterieträgeranordnung 1, aufweisend einen Batterieträger 2 auch Batteriekasten genannt. Der Batterieträger 2 weist einen auf die Kraftfahrzeugvertikalrichtung Z unten angeordnetes Bodenblech 3 auf. Ferner sind Seitenwände 4, 5 vorhanden. Dies sind zum einen Querseitenwände 4, die Kraftfahrzeuglängsrichtung X vorne und hinten liegen sowie eine nicht näher dargestellte Rückseitenwand sowie auf die Kraftfahrzeugquerrichtung Y bezogen Längsseitenwände 5, die sich in Kraftfahrzeuglängsrichtung X erstrecken und auf die Kraftfahrzeugquerrichtung Y bezogen jeweils seitlich im äußeren Bereich angeordnet sind. Die Querseitenwände 4 und Längsseitenwände 5, auch Seitenwände genannt, bilden eine außen umlaufende Seitenwand. Das Bodenblech 3 bildet einen Boden 6 aus. Hierdurch ist ein Batteriekasten ausgebildet. Der Batteriekasten weist dann ferner einen Haubenboden 7 auf, so dass eine Haube 7.1 in das Bodenblech 3 eingesetzt ist. Die Haube 7.1 weist mit ihrer Öffnung, nicht näher dargestellt, auf die Kraftfahrzeugvertikalrichtung Z in Einbausituation nach unten. Der Haubenboden 7 weist somit in Kraftfahrzeugvertikalrichtung Z nach oben. Die Haube 7.1 ist weiterhin durch Querseitenwände 4 und Längsseitenwände 5 ausgebildet. Die Querseitenwände 4 und die Längsseitenwände 5 sind zusammen mit dem Haubenboden 7 einstückig und werkstoffeinheitlich hergestellt, beispielsweise als Umformbauteil, insbesondere als Faltbauteil, mithin werden die Seitenwände gegenüber dem Haubenboden abgekantet bzw. umgebogen. Alternativ kann die Haube 7.1 auch als Tiefziehbauteil hergestellt werden oder aus mehreren Bauteilen zusammengesetzt sein.

Erfindungsgemäß ist nunmehr nach außen in Kraftfahrzeugquerrichtung Y über die Längsseitenwand 5 überstehend eine jeweilige Rahmenseitenwand 8 ausgebildet. Die Rahmenseitenwand 8 ist Bestandteil des Bodenbleches 3. Die Rahmenseitenwand 8 ist einstückig und werkstoffeinheitlich mit dem Boden 6 ausgebildet. Die Rahmenseitenwand 8 steht zunächst über die Längsseitenwand 5 in Kraftfahrzeugquerrichtung Y über, mithin verläuft der Boden 6 über die Längsseitenwand 5 in Kraftfahrzeugquerrichtung Y hinaus. Sodann ist ein Teil der Rahmenseitenwand 8 auf die Kraftfahrzeugvertikalrichtung Z schräg nach oben ausgebildet.

Nach außen abstehend ist bevorzugt weiterhin ein Flansch 9 vorgesehen, der wiederum in Kraftfahrzeugquerrichtung Y von der Rahmenseitenwand 8 vor dem schräg nach oben laufenden Teil der Rahmenseitenwand 8 abstehend ist. Flansch 9, Rahmenseitenwand 8 und Boden 6 sind einstückig und werkstoffeinheitlich aus einer Blechplatine hergestellt.

Die Längsseitenwände 5 und Querseitenwände 4 weisen bevorzugt einen Flansch auf und sind mit dem Flansch auf den Boden 6 aufgesetzt, beispielsweise über Verschraubungen 10, wie in Figur 2 dargestellt, bevorzugt unter Eingliederung eines Dichtmittels.

Ebenfalls in Figur 2, welche eine perspektivische Ansicht von unten auf den erfindungsgemäßen Batterieträger 2 darstellt, ist ersichtlich, dass in Kraftfahrzeuglängsrichtung X Versteifungssicken 11 bzw. Längssicken ausgebildet sind. Diese verlaufen in Kraftfahrzeuglängsrichtung X. Die Versteifungssicken 11 sind auf die Kraftfahrzeugvertikalrichtung Z bezogen nach unten über den Boden 6 überstehend ausgebildet. Die Versteifungssicken 11 erstrecken sich nur über einen Teil in Kraftfahrzeuglängsrichtung X des Bodens 6, insbesondere weniger als 95 %. Hierdurch ist insbesondere sichergestellt, dass die jeweilige Querseitenwand 4 über Punktschweißungen gekoppelt werden kann. Gleichzeitig ist der dadurch ausgebildete Batteriekasten entsprechend dicht ausgebildet ist.

Ferner sind Einprägungen/Schrauben 12 bzw. Einmuldungen bzw. Quersicken ausgebildet im Übergangsbereich der Rahmenseitenwand 8. Konkret sind die Einprägungen 12 ausgebildet zwischen einem horizontal erstreckenden Anteil der Rahmenseitenwand 8 und dem schräg nach oben verlaufenden Teil. Die Einprägungen 12 versteifen den überstehenden Teil der Rahmenseitenwand 8 in sich, insbesondere bezogen auf die Kraftfahrzeugquer- Y und -vertikalrichtung Z. Ferner sind Montageöffnungen 13 vorgesehen, sodass die Batterieträgeranordnung 1 durch Schraubbolzen, die den Flansch 9 durchgreifen, von unten an ein Kraftfahrzeug im Bereich der Schweller angebunden werden kann. Die Anbindung kann dabei beispielsweise an den Schweller selbst oder zusätzlich vorhandene Längsträger erfolgen.

Weiterhin vorgesehen ist ein oberes Rahmenblech 14. Dieses obere Rahmenblech 14 bildet in Verbindung mit der Seitenwand sowie der Rahmenseitenwand 8 im Querschnitt ein geschlossenes Hohlprofil aus. Das Hohlprofil ist hier insbesondere L-förmig ausgebildet. Hierdurch ist ein Versteifungsrahmen an dem Batterieträger 2 ausgebildet. In dem sich ergebenden Abstand 15 zwischen Flansch 9 und Rahmenblech 8 können nicht näher dargestellte Distanzhülsen 17 oder Abstandshalter angeordnet sein, so dass bei Durchgreifen von entsprechenden Verschraubungen hier eine hinreichende Stabilität gegeben ist.

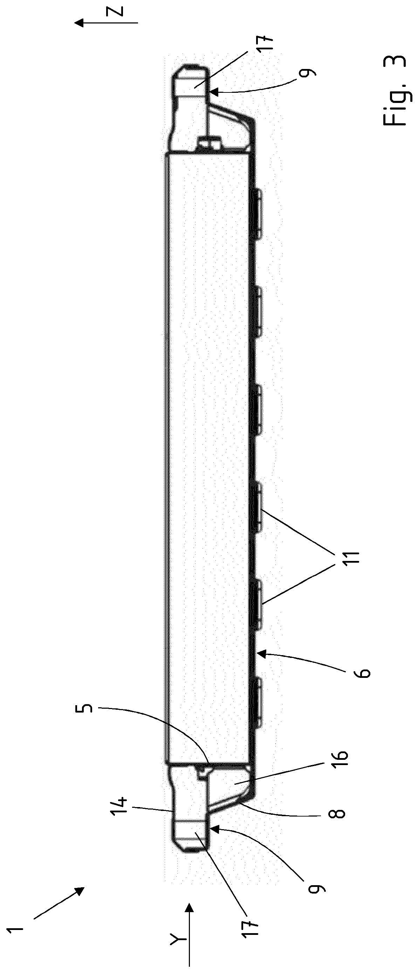

Figur 3 zeigt eine Stirnansicht auf die erfindungsgemäße Batterieträgeranordnung 1. Gut zu erkennen ist, dass zwischen dem oberen Rahmenblech 14 und der Rahmenseitenwand 8 im Querschnitt ein L-förmiges Hohlprofil ausgebildet ist. Hier können insbesondere, beispielsweise Abstandsbleche 16 eingesetzt sein, so dass bei einem Seitenaufprall in Kraftfahrzeugquerrichtung Y eine zusätzliche Versteifung zwischen Rahmenseitenwand 8 und Längsseitenwand 5 gegeben ist. Ferner sind die Abstandshülsen 17 dargestellt, so dass der Flansch 9 von einem nicht näherdargestellten Schraubbolzen durchgriffen werden kann und dann die dargestellte Batterieträgeranordnung 1 von unten in Kraftfahrzeugvertikalrichtung Z an ein nicht näher dargestelltes Kraftfahrzeug geschraubt werden kann. Zusätzlich dargestellt ist, dass die Versteifungssicken 11 auf die Kraftfahrzeugvertikalrichtung Z nach unten über den Boden 6 überstehen.

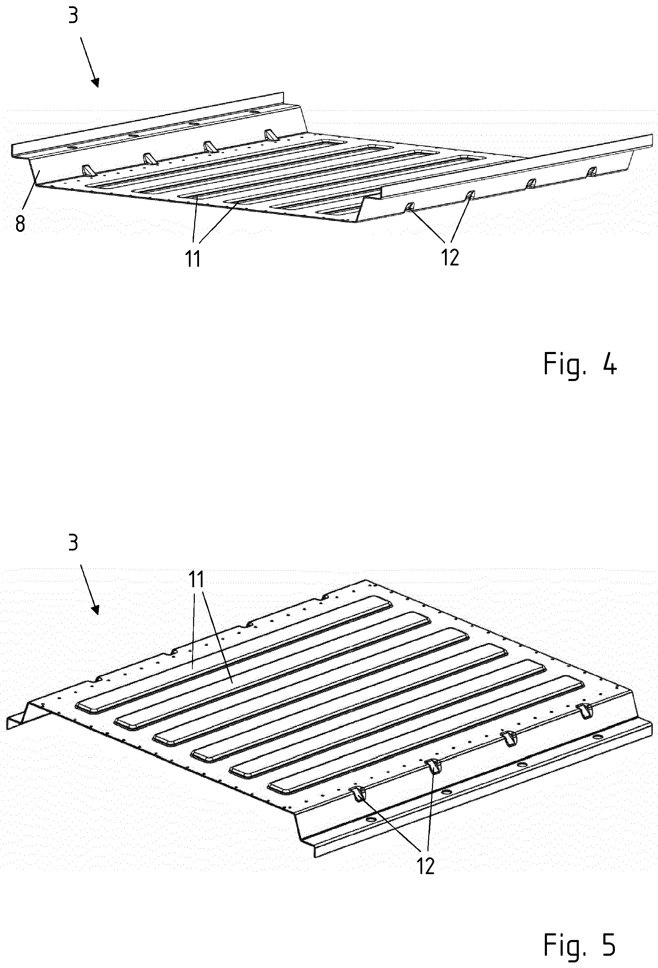

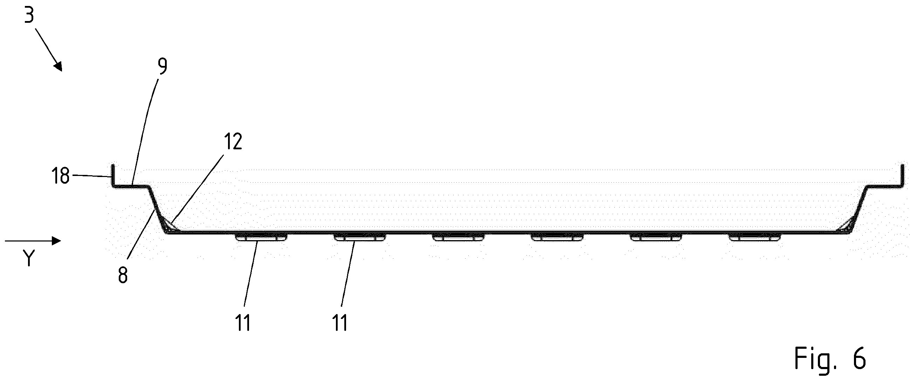

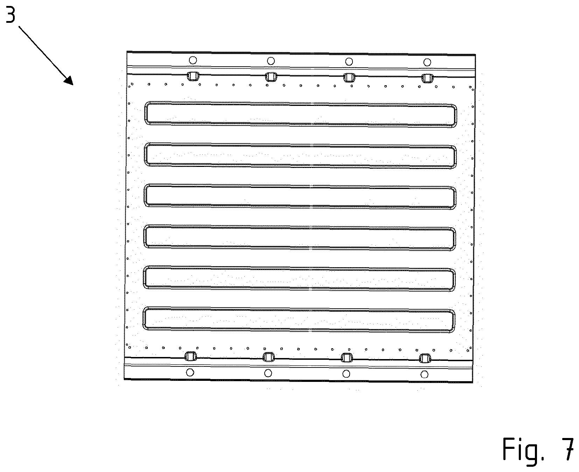

Figuren 4, 5, 6 und 7 zeigen verschiedene Ansichten des erfindungsgemäßen Bodenblechs 3. Hier ist insbesondere ersichtlich, dass das Bodenblech 3 keine Stirnund Heckwand aufweist, sondern nur die erfindungsgemäße Rahmenseitenwand 8. Das Bodenblech 3 ist somit vereinfacht durch ein Umformverfahren, insbesondere Tiefziehverfahren oder Pressumformverfahren, herstellbar. Das Bodenblech 3 ist im Querschnitt selbst U-förmig konfiguriert. Gegenüber dem in Kraftfahrzeugquerrichtung Y seitlich abstehenden Flansch 9 ist nochmal obenstehend ein Vertikalflansch 18 ausgebildet. Dieser kann dann mit dem nicht näher dargestellten oberen Rahmenblech 14 gekoppelt werden.

### Bezugszeichen:

- 1 -: Batterieträgeranordnung
- 2 -: Batterieträger
- 3 -: Bodenblech
- 4 -: Querseitenwand
- 5 -: Längsseitenwand
- 6 -: Boden
- 7 -: Haubenboden
- 7.1 -: Haube
- 8 -: Rahmenseitenwand
- 9 -: Flansch
- 10 -: Verschraubung
- 11 -: Versteifungssicke
- 12 -: Einprägung
- 13 -: Montageöffnung
- 14 -: oberes Rahmenblech
- 15 -: Abstand
- 16 -: Abstandsblech
- 17 -: Abstandshülse
- 18 -: Vertikalflansch

- X -: Kraftfahrzeuglängsrichtung
- Y -: Kraftfahrzeugquerrichtung
- Z -: Kraftfahrzeugvertikalrichtung

## Patentansprüche

1. Batterieträgeranordnung (1) für ein Elektrofahrzeug, aufweisend eine Batteriewanne, aufweisend einen Boden (6) und eine auf dem Boden (6) aufgesetzte Haube (7.1) mit einem Haubenboden (7) und Seitenwänden (4, 5), wobei der Boden (6) hergestellt ist, als warmumgeformtes und pressgehärtetes Bauteil aus einer Stahlblechplatine, und der Boden (6) einstückig und werkstoffeinheitlich seitlich über die Seitenwände (5) der Batteriewanne in Kraftfahrzeugquerrichtung (Y) überstehende Rahmenseitenwände (8) aufweist, welche in Kraftfahrzeugvertikalrichtung (Z) abschnittsweise schräg nach oben verlaufen, **dadurch gekennzeichnet, dass** die Haube (7.1) an ihrem Ende der Seitenwände (4, 5) einen nach außen abstehenden umlaufenden Flansch aufweist, der mit dem Boden (6) gekoppelt ist.

2. Batterieträgeranordnung (1) nach Anspruch 1, **dadurch gekennzeichnet, dass** in dem Boden (6) Sicken eingeformt sind, insbesondere verlaufen die Sicken in Kraftfahrzeuglängsrichtung (X), dergestalt, dass der Boden (6) als Unterfahrschutzblech ausgebildet ist.

3. Batterieträgeranordnung (1) nach Anspruch 1 oder 2, **dadurch gekennzeichnet, dass** im Übergang von Boden (6) zu Rahmenseitenwand (8) und/oder im Übergang von Rahmenseitenwand (8) zu Flansch (9) Quersicken eingeformt sind.

4. Batterieträgeranordnung (1) nach einem der vorherigen Ansprüche, **dadurch gekennzeichnet, dass** die Seitenwände (4, 5) der Haube (7.1) mit dem Boden (6) gekoppelt sind.

5. Batterieträgeranordnung (1) nach einem der vorherigen Ansprüche, **dadurch gekennzeichnet, dass** auf der Rahmenseitenwand (8) ein oberes Rahmenblech (14) aufgesetzt ist, welches insbesondere mit der Seitenwand (5) gekoppelt ist, dergestalt, dass sich ein im Querschnitt geschlossenes Hohlprofil zwischen Seitenwand (5), Rahmenseitenwand (8) und oberem Rahmenblech (14) ergibt.

6. Batterieträgeranordnung (1) nach einem der vorherigen Ansprüche, **dadurch gekennzeichnet, dass** zwischen Rahmenseitenwand (8) und Längsseitenwand (5) Abstandhalter oder Deformationselemente eingesetzt sind.

7. Batterieträgeranordnung (1) nach einem der vorherigen Ansprüche, **dadurch gekennzeichnet, dass** an den Rahmenseitenwänden (8) ein nach außen abstehender Flansch (9) ausgebildet ist.

8. Batterieträgeranordnung (1) nach einem der vorherigen Ansprüche, **dadurch gekennzeichnet, dass** zwischen Rahmenblech (14) und Flansch (9) der Rahmenseitenwand (8) ein Abstand (15) ausgebildet ist, wobei Abstandshülsen (17) eingesetzt sind, dergestalt, dass Schraubverbindungen, den Flansch (9), die Abstandshülse (17) und das Rahmenblech (14) durchgreifend angeordnet sind, welcher den Batterieträger (2) anbinden.

9. Batterieträgeranordnung (1) nach einem der vorherigen Ansprüche, **dadurch gekennzeichnet, dass** der Boden (6) aus einer Tailored Platine hergestellt ist oder dass der Boden (6) Tailored Properties aufweist.

10. Batterieträgeranordnung (1) nach einem der vorherigen Ansprüche, **dadurch gekennzeichnet, dass** der Boden (6) zumindest abschnittsweise eine Zugfestigkeit Rm von mehr als 1200 MPa aufweist, insbesondere mehr als 1350 MPa aufweist

11. Batterieträgeranordnung (1) nach einem der vorherigen Ansprüche, **dadurch gekennzeichnet, dass** der Boden (6) eine hohe Zugfestigkeit aufweist und im Bereich der Rahmenseitenwand (8) und/oder des Flansches (9) in Relation die Zugfestigkeit gegenüber dem Boden (6) herabgesetzt ist, bevorzugt beträgt die Zugfestigkeit in der Rahmenseitenwand (8) und oder des Flansches (9) 500 MPa bis 1000 MPa, insbesondere 550 MPa bis 850 MPa.

12. Batterieträgeranordnung (1) nach Anspruch 2, **dadurch gekennzeichnet, dass** in dem Boden (6) sowohl nach innen überstehende Sicken (6) als auch nach außen überstehende Sicken (6) ausgeprägt sind.

## Claims

1. Battery carrier assembly (1) for an electric vehicle, comprising a battery tray having a floor (6) and a hood (7.1) mounted on the floor (6) with a hood floor (7) and side walls (4, 5), wherein the floor (6) is manufactured as a hot-formed and presshardened component from a steel sheet, and the floor (6) has integrally and materially uniform frame side walls (8) projecting laterally over the side walls (5) of the battery tray in the vehicle transverse direction (Y), which extend obliquely upward in sections in the vehicle vertical direction (Z), **characterized in that** the hood (7.1) has, at its end of the side walls (4, 5), a circumferential flange projecting outward, which is coupled with the floor (6).

2. Battery carrier assembly (1) according to claim 1, **characterized in that** beads are formed in the floor (6), in particular extending in the vehicle longitudinal direction (X), such that the floor (6) is designed as an underbody protection plate.

3. Battery carrier assembly (1) according to claim 1 or 2, **characterized in that** cross beads are formed at the transition from the floor (6) to the frame side wall (8) and/or at the transition from the frame side wall (8) to the flange (9).

4. Battery carrier assembly (1) according to any one of the preceding claims, **characterized in that** the side walls (4, 5) of the hood (7.1) are coupled with the floor (6).

5. Battery carrier assembly (1) according to any one of the preceding claims, **characterized in that** an upper frame plate (14) is mounted on the frame side wall (8), in particular coupled with the side wall (5), such that a cross-sectionally closed hollow profile is formed between the side wall (5), the frame side wall (8), and the upper frame plate (14).

6. Battery carrier assembly (1) according to any one of the preceding claims, **characterized in that** spacers or deformation elements are inserted between the frame side wall (8) and the longitudinal side wall (5).

7. Battery carrier assembly (1) according to any one of the preceding claims, **characterized in that** an outwardly projecting flange (9) is formed on the frame side walls (8).

8. Battery carrier assembly (1) according to any one of the preceding claims, **characterized in that** a gap (15) is formed between the frame plate (14) and the flange (9) of the frame side wall (8), wherein spacer sleeves (17) are inserted, such that screw connections are arranged through the flange (9), the spacer sleeve (17), and the frame plate (14), which secure the battery carrier (2).

9. Battery carrier assembly (1) according to any one of the preceding claims, **characterized in that** the floor (6) is manufactured from a tailored blank or that the floor (6) has tailored properties.

10. Battery carrier assembly (1) according to any one of the preceding claims, **characterized in that** the floor (6) has, at least in sections, a tensile strength Rm of more than 1200 MPa, in particular more than 1350 MPa.

11. Battery carrier assembly (1) according to any one of the preceding claims, **characterized in that** the floor (6) has a high tensile strength and that, in the region of the frame side wall (8) and/or the flange (9), the tensile strength is reduced relative to the floor (6); preferably, the tensile strength in the frame side wall (8) and/or the flange (9) is 500 MPa to 1000 MPa, in particular 550 MPa to 850 MPa.

12. Battery carrier assembly (1) according to claim 2, **characterized in that** the floor (6) has both inwardly projecting beads (6) and outwardly projecting beads (6).

## Revendications

1. Ensemble porte-batterie (1) pour un véhicule électrique, comprenant un bac à batterie présentant un plancher (6) et un capot (7.1) monté sur le plancher (6) avec un fond de capot (7) et des parois latérales (4, 5), le plancher (6) étant fabriqué comme un composant embouti à chaud et durci par pressage à partir d'une tôle d'acier, et le plancher (6) présentant des parois latérales de cadre (8) intégrales et homogènes en matériau dépassant latéralement les parois latérales (5) du bac à batterie dans la direction transversale du véhicule (Y), lesquelles s'étendent obliquement vers le haut par sections dans la direction verticale du véhicule (Z), **caractérisé en ce que** le capot (7.1) présente, à son extrémité des parois latérales (4, 5), une bride périphérique saillante vers l'extérieur, qui est couplée au plancher (6).

2. Ensemble porte-batterie (1) selon la revendication 1, **caractérisé en ce que** des nervures sont formées dans le plancher (6), en particulier s'étendant dans la direction longitudinale du véhicule (X), de telle sorte que le plancher (6) est conçu comme une plaque de protection sous le véhicule.

3. Ensemble porte-batterie (1) selon la revendication 1 ou 2, **caractérisé en ce que** des nervures transversales sont formées à la transition du plancher (6) vers la paroi latérale du cadre (8) et/ou à la transition de la paroi latérale du cadre (8) vers la bride (9).

4. Ensemble porte-batterie (1) selon l'une des revendications précédentes, **caractérisé en ce que** les parois latérales (4, 5) du capot (7.1) sont couplées avec le plancher (6).

5. Ensemble porte-batterie (1) selon l'une des revendications précédentes, **caractérisé en ce qu'**une plaque de cadre supérieure (14) est montée sur la paroi latérale du cadre (8), en particulier couplée avec la paroi latérale (5), de telle sorte qu'un profilé creux fermé en coupe transversale est formé entre la paroi latérale (5), la paroi latérale du cadre (8) et la plaque de cadre supérieure (14).

6. Ensemble porte-batterie (1) selon l'une des revendications précédentes, **caractérisé en ce que** des entretoises ou éléments de déformation sont insérés entre la paroi latérale du cadre (8) et la paroi longitudinale (5).

7. Ensemble porte-batterie (1) selon l'une des revendications précédentes, **caractérisé en ce qu'**une bride saillante vers l'extérieur (9) est formée sur les parois latérales du cadre (8).

8. Ensemble porte-batterie (1) selon l'une des revendications précédentes, **caractérisé en ce qu'**un espace (15) est formé entre la plaque de cadre (14) et la bride (9) de la paroi latérale du cadre (8), des manchons d'espacement (17) étant insérés, de telle sorte que des connexions par vis sont disposées à travers la bride (9), le manchon d'espacement (17) et la plaque de cadre (14), lesquelles fixent le porte-batterie (2).

9. Ensemble porte-batterie (1) selon l'une des revendications précédentes, **caractérisé en ce que** le plancher (6) est fabriqué à partir d'une tôle adaptée (tailored blank) ou que le plancher (6) présente des propriétés adaptées (tailored properties).

10. Ensemble porte-batterie (1) selon l'une des revendications précédentes, **caractérisé en ce que** le plancher (6) présente, au moins par sections, une résistance à la traction Rm supérieure à 1200 MPa, en particulier supérieure à 1350 MPa.

11. Ensemble porte-batterie (1) selon l'une des revendications précédentes, **caractérisé en ce que** le plancher (6) présente une résistance à la traction élevée et que, dans la région de la paroi latérale du cadre (8) et/ou de la bride (9), la résistance à la traction est réduite par rapport au plancher (6); de préférence, la résistance à la traction dans la paroi latérale du cadre (8) et/ou la bride (9) est de 500 MPa à 1000 MPa, en particulier de 550 MPa à 850 MPa.

12. Ensemble porte-batterie (1) selon la revendication 2, **caractérisé en ce que** le plancher (6) présente à la fois des nervures saillantes vers l'intérieur (6) et des nervures saillantes vers l'extérieur (6).
